# EUROPEAN PATENT APPLICATION

(11) **EP 4 629 529 A1**
(43) Date of publication of application: **08.10.2025**
(21) Application number: 24219804.2
(22) Date of filing: 13.12.2024
(51) Int. Cl.: H04B 10/70

(54) **QUANTUM KEY DISTRIBUTION NETWORK**

(30) Priority: 04.04.2024 GB 202404818
(71) Applicant: Kabushiki Kaisha Toshiba, Minato-ku Tokyo (JP)
(72) Inventor: DU, Han, Cambridge, CB4 0GZ (GB); PARAISO, Taofiq Kolawole, Cambridge, CB4 0GZ (GB); PITTALUGA, Mirko, Cambridge, CB4 0GZ (GB); LO, Yuen San, Cambridge, CB4 0GZ (GB); WOODWARD, Robert Ian, Cambridge, CB4 0GZ (GB); SHIELDS, Andrew James, Cambridge, CB4 0GZ (GB)
(74) Representative: Marks & Clerk LLP

(57) **Abstract**

A quantum key distribution (QKD) system is disclosed having a primary node and at least two secondary nodes. The primary node includes a primary laser and an interference unit. Each secondary node includes a secondary laser on a photonic integrated circuit (PIC), as well as an encoder that encodes quantum states onto light emitted by the secondary laser. The secondary lasers are configured to be injected by light from the primary laser in an optical injection locking scheme. The interference unit is configured to perform single-photon interference measurements on light received from the secondary lasers. An accompanying method is also disclosed.

## Description

### FIELD OF THE INVENTION

Embodiments described herein generally relate to quantum key distribution.

### BACKGROUND TO THE INVENTION

In a quantum communication system, information is encoded into a quantum system and sent between a transmitter and a receiver. Quantum effects such as superposition and entanglement can be used to distribute secret keys, perform teleportation, and other exotic tasks.

Quantum key distribution (QKD) is a technique which results in the sharing of cryptographic keys between two parties: a transmitter often referred to as "Alice"; and a receiver often referred to as "Bob". The attraction of this technique is that it provides a test of whether any part of the key can be known to an unauthorised eavesdropper, often referred to as "Eve". In many forms of quantum key distribution, Alice and Bob use two or more non-orthogonal bases in which to encode the bit values. The laws of quantum mechanics dictate that measurement of the photons by Eve without prior knowledge of the encoding basis of each causes an unavoidable change to the state of some of the photons. These changes to the states of the photons will cause errors in the bit values sent between Alice and Bob. By comparing a part of their common bit string, Alice and Bob can thus determine if Eve has gained information.

Measurement device independent protocols have been developed such as MDI-QKD and Twin Field QKD (TF-QKD). In these protocols, Alice and Bob prepare photons and send them to a measurement unit which is hosted by Charlie. Charlie performs an interference measurement between the photons received from Alice and Bob and publicly announces the results. Alice and Bob then publicly announce the measurement basis that they used, but not the state that they sent. This means that when the bases match, Alice will know what state Bob sent since she knows the results of the interference measurements and she knows the state that she sent to Charlie. Similarly, Bob will be able to establish the state prepared by Alice.

Optical injection locking (OIL) is a widely used technique in laser systems, in fields including quantum communication. Optical injection locking generally involves a primary laser and secondary laser. For example, light from the primary laser may be used to define the phase between pulses output by the secondary laser.

### BRIEF DESCRIPTION OF THE DRAWINGS

Fig. 1 shows a schematic of a single photon interference measurement;
Fig. 2 shows a quantum key distribution (QKD) system in accordance with an embodiment;
Figs. 3A-3D show photonic integrated circuits (PICs) that may be used in the system of Fig. 2;
Fig. 4 shows a further PIC that may be used in the system of Fig. 2;
Fig. 5 shows a further QKD system in accordance with an embodiment; and
Fig. 6 shows a flow chart of a method of QKD.

### DETAILED DESCRIPTION

In an embodiment, a quantum key distribution (QKD) system is provided, comprising: a primary node comprising a primary laser and an interference unit; and two secondary nodes, each secondary node comprising a photonic integrated circuit (PIC), each PIC comprising a secondary laser configured to be injected by light from the primary laser, each secondary node further comprising an encoder configured to encode quantum states onto light emitted by the secondary laser; wherein the interference unit is configured to perform single-photon interference measurements on light received from the secondary lasers.

The use of on-chip secondary lasers (that is, secondary lasers implemented on PICs) allows for the secondary nodes to be smaller and lower-cost compared to off-chip lasers, as well as allowing higher production yields.

The use of optical injection locking (OIL) between the primary and secondary lasers allows for global phase coherence across the system (i.e. phase coherence between the primary laser and each secondary laser, and therefore between all secondary lasers). This is generally a requirement for implementing twin-field QKD (TF-QKD) as discussed below.

Additionally, OIL locks the wavelength of each secondary laser to the primary laser's wavelength. This is particularly helpful given that the wavelengths of on-chip lasers are often difficult to tune precisely.

In cases where the primary laser has narrower linewidth than the secondary lasers, OIL also allows for narrowing of the linewidth of the secondary lasers. This is particularly beneficial as on-chip lasers often have broad linewidths. As well as avoiding any negative effects of broad secondary laser linewidths, this also avoids the need to use specialised and/or expensive narrow-linewidth lasers for the secondary lasers, thereby reducing the cost and complexity of the system.

On-chip lasers also often have prominent side modes which are suppressed by OIL.

OIL further avoids the need for e.g. a phase-locked loop, which requires additional hardware such as reference oscillators and a control system, increasing the cost and bulk of the overall system.

In an embodiment, each PIC may further comprise an input port and an output port, the respective secondary laser comprising an input port connected to the input port of the PIC and an output port connected to the output port of the PIC.

This configuration has the benefit that light from the primary laser entering the input port may be largely blocked by the secondary laser, thereby limiting the amount of primary laser light that reaches the output of the PIC to be emitted along with the secondary laser output.

In an embodiment, each PIC may further comprise an input port, an output port, and a splitter, the splitter being coupled to the input port, the output port, and a port of the respective secondary laser.

This configuration includes the splitter on the PIC, allowing for a more compact secondary node by avoiding the need for an external splitter.

In an embodiment, each PIC may further comprise an input port, and output port, and a circulator comprising three ports, further wherein: a first port of the circulator is coupled to the input port; a second port of the circulator is coupled to a port of the respective secondary laser; and a third port of the circulator is coupled to the output port..

This configuration includes the circulator on the PIC, allowing for a more compact secondary node by avoiding the need for an external circulator.

In an embodiment, each PIC may further comprise a port coupled to a port of the respective secondary laser, and wherein each secondary node further comprises a beam combining component coupled to the port of the secondary PIC.

In an embodiment, one of the encoders may comprise an intensity modulator.

This allows intensity modulation for the encoding of quantum states into portions (e.g. pulses) of the light emitted from the respective secondary laser.

In an embodiment, one of the encoders may comprise a phase modulator.

This allows phase modulation for the encoding of quantum states into portions (e.g. pulses) of the light emitted from the respective secondary laser.

In an embodiment, each encoder may be included on the PIC of the respective secondary node.

This allows for a more compact secondary node, with the secondary laser and associated encoder included on a single PIC.

In an embodiment, one of the PICs may further comprise a variable optical attenuator, a wavelength-division multiplexer or de-multiplexer, an optical filter, or a polariser.

This allows general manipulation (e.g. intensity control, multiplexing, filtering, polarisation control, and/or polarisation-based beam-splitting) while maintaining a compact secondary node, by including additional components on the same PIC as the secondary laser rather than providing the additional components separately (i.e. off the PIC).

In an embodiment, the interference unit may comprise a beamsplitter configured to receive light from each of two secondary lasers, and two photodetectors coupled to output ports of the beamsplitter, such that a detection event at one of the beamsplitters indicates a single-photon interference measurement.

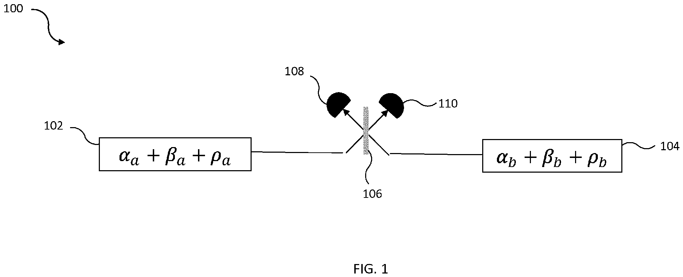

This allows the implementation of single-photon interference measurements in a manner generally consistent with Fig. 1 described below, for use in e.g. TF-QKD.

In a further embodiment, a method of quantum key distribution (QKD) is provided, the method comprising: emitting light from a primary laser; receiving the emitted light at each of two secondary lasers, each secondary laser on a photonic integrated circuit (PIC); using the received light for optical injection locking (OIL) of each secondary laser; emitting further light from each secondary laser; encoding quantum states onto the further light; and performing a single-photon interference measurement on the further light.

This method offers the benefits of on-chip secondary lasers and OIL discussed above.

In an embodiment, encoding quantum states onto the further light may comprise modulating an intensity of a portion of the further light.

In an embodiment, encoding quantum states onto the further light may comprise modulating a phase of a portion of the further light.

In an embodiment, performing a single-photon interference measurement on the further light may comprise: receiving light from each of two secondary lasers; combining the received light from each secondary laser at a beamsplitter; and registering a detection event at a photodetector coupled to an output port of the beamsplitter.

This allows the implementation of single-photon interference measurements in a manner generally consistent with Fig. 1 described below, for use in e.g. TF-QKD.

Fig. 1 is a schematic of a single photon interference measurement 100.

Here, Alice 102 and Bob 104 both send a single signal pulse containing the following three random items of information to Charlie.
Bit information (α)
Basis information (β)
Random phase (ρ)

The results of an interference measurement at interference unit 106 are detected with detectors 108 and 110. If they are twins, the detection results are as indicated below, depending on the bit information sent by Alice and Bob. As shown, the interference unit 106 may comprise a beamsplitter.

The bit information matches: Detected by "Detector 1" 108.

The bit information does not match: Detected by "Detector 2" 110. Classical channels are used to announce the result of which detector, detected the twin.

Alice and Bob then use the classical channels to share information on the bases and random phases they chose to prepare their states. They retain the data they determined were twins and discard all other data. This enables them to obtain each other's undisclosed bit information:

| | Alice αₐ | Bob α_{b} |
|---|---|---|
| Detected by detector 1 (bits match) | 0 | 0 |
| | 1 | 1 |
| Detected by detector 2 (bits do not match) | 0 | 1 |
| | 1 | 0 |

Thus, Charlie's interference measurement allows Alice and Bob to be able to determine each other's state, if the basis matches.

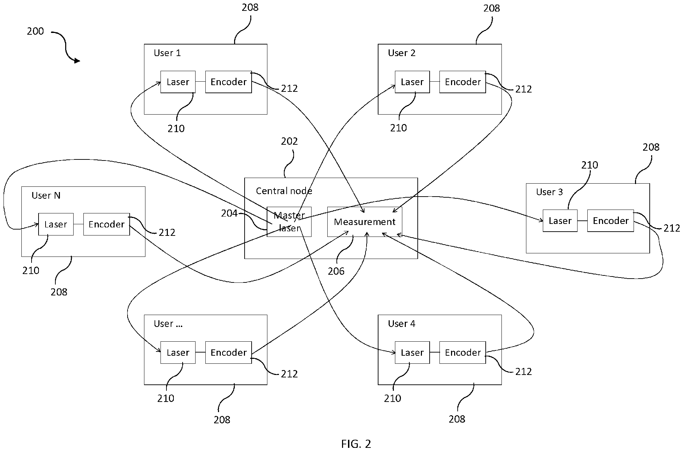

Fig. 2 shows a quantum key distribution (QKD) network 200. The network 200 comprises a primary node 202 (otherwise referred to herein as a central node), and two or more secondary nodes 208 (otherwise referred to herein as users). While Fig. 2 shows 6 secondary nodes 208, the network 200 may be implemented with any number of secondary nodes 208 as long as there are at least two.

The primary node 202 comprises a primary laser 204 (otherwise referred to herein as a master laser) and an interference unit 206 (otherwise referred to herein as a measurement device). The interference unit 206 is configured to perform single-photon interference measurements, which may for example be performed as described above with regard to Fig. 1. In that case the interference unit may, for example, comprise a beamsplitter and two photodetectors in an arrangement functionally similar to that shown in Fig. 1.

Each secondary node 208 comprises a secondary laser 210 and an encoder 212. Each encoder 212 is configured to encode quantum states onto light emitted from the secondary laser 210 at the same secondary node 208 as the encoder 212 (i.e. the respective secondary laser 210). This encoding may, for example, involve phase and/or intensity modulation.

The secondary lasers 210 are implemented on photonic integrated circuits (PICs), otherwise referred to herein as secondary PICs. Each encoder 212 may be implemented on the same secondary PIC as the respective secondary laser 210, or may be separate and not implemented on a PIC.

The primary laser 204 may optionally also be implemented on a PIC, also referred to herein as a primary PIC. Alternatively, the primary laser 204 may be off-chip (that is, not on a PIC).

Each secondary laser 210 is configured to be injected using light from the primary laser 204 via optical injection locking (OIL). This allows for global phase coherence between the primary laser 204 and each secondary laser 210 (and therefore between all secondary lasers 210), which is generally a requirement for implementing twin-field quantum key distribution (TF-QKD). This process may be referred to as phase dissemination.

Some of the secondary lasers 210 may, for example, be distributed-feedback (DFB) lasers or distributed Bragg reflector (DBR) lasers. It will be appreciated that many other laser technologies may be used for the secondary lasers 210, and that there may be a mix of laser technologies among the secondary lasers.

If the primary laser 204 has narrower linewidth than the secondary lasers 210, the use of OIL will allow narrowing of the secondary laser linewidth as described above. It is therefore envisioned that in many applications the primary laser 204 may be a narrow-linewidth laser, and may in particular have a narrower linewidth than the secondary lasers 210, to take advantage of this effect. For example, this will often be the case if the primary laser 204 is off-chip, since on-chip lasers (such as the secondary lasers 210) generally have broader linewidth than off-chip lasers.

During operation, the master laser 204 emits light, at least some of which is conveyed to each secondary laser 210 as indicated in Fig. 2. For example, the emitted light may travel in free space, or via an optical fibre. This light injects each secondary laser 210, locking them to the primary laser 204 as described above. Each secondary laser 210 then emits light, which may be modulated by the corresponding encoder 212 to carry quantum information. At least some of this light then travels, again via e.g. free space or optical fibre, to arrive at the interference unit 206. The interference unit 206 performs single-photon interference measurements on the received light. Generally speaking, these single-photon interference events may involve fields emitted by pairs of secondary lasers 210, resulting in the creation of entangled states between the secondary nodes 208.

This operation may generally be viewed as implementing a TF-QKD protocol, allowing for the sharing of quantum information between secondary nodes 208. With reference to the above description of Fig. 1, Alice 102 and Bob 104 may be viewed as corresponding to any two secondary nodes 208, while Charlie may be considered to correspond to the primary node 202.

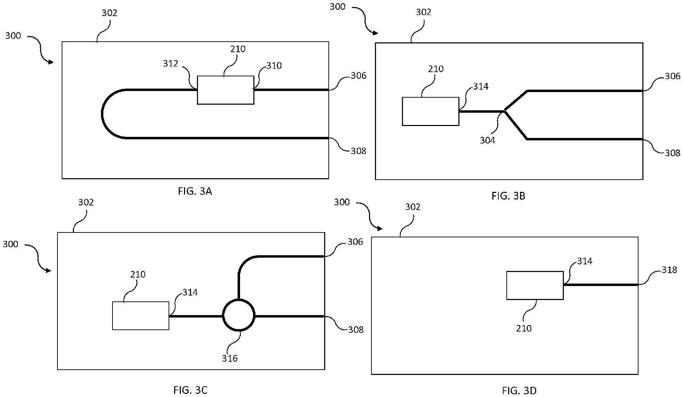

Figs. 3A to 3D show possible implementations of the secondary PICs described above with reference to Fig. 2. In each case the PIC 300 comprises a substrate 302 and a secondary laser 210. The substrate may comprise indium phosphide (InP). Additionally or alternatively, the substrate may comprise any other material suitable for implementing PICs, such as silicon (Si) or silicon nitride (SiN). As shown in the figures, the PIC 300 is generally envisioned to further comprise waveguides laid on the surface of the substrate 302 suitable for conveying light to components included on the PIC 300.

Fig. 3A shows an arrangement which may be referred to as transmission seeding. In this embodiment, the PIC 300 comprises an input port 306 and an output port 308. The secondary laser 210 also comprises an input port 310 and an output port 312. Waveguides are used to connect the input port 306 of the PIC 300 to the input port 310 of the secondary laser 210, and further to connect the output port 312 of the secondary laser 210 to the output port 308 of the PIC 300.

In operation, light from the primary laser 204 may arrive at the input port 306 of the PIC 300, via free space, an optical fibre, or any other means, and be conveyed across the substrate 302 to the input port 310 of the secondary laser 210. This light may inject the secondary laser 210 via OIL. The secondary laser 210 may then emit further light from its output port 312. This further light may travel to the output port 308 of the PIC 300, and from there to the interference unit 206 for measurement.

In this embodiment, it is generally envisioned that the secondary laser 210 may substantially block light that arrives at the input port 306 of the PIC 300 from reaching the output port 308 of the PIC 300.

Fig. 3B shows an arrangement which may be referred to as reflection seeding. In this embodiment, the PIC 300 comprises an input port 306 and an output port 308. The secondary laser 210 comprises a port 314 which acts as both input and output. Waveguides leading from the input port 306 and output port 308 of the PIC 300 are joined at a splitter 304, which is further connected to the port 314 of the secondary laser 210.

In operation, light from the primary laser 204 may arrive at the input port 306 of the PIC 300, via free space, an optical fibre, or any other means, and be conveyed across the substrate 302 to the port 314 of the secondary laser 210 via reflection from the splitter 304. This light may inject the secondary laser 210 via OIL. The secondary laser 210 may then emit further light from its port 314. This further light may travel to the output port 308 of the PIC 300 via reflection from the splitter 304, and from there to the interference unit 206 for measurement.

In this embodiment, it is generally envisioned that some light arriving at the input port 306 of the PIC 300 may arrive directly at the output port 308 of the PIC 300 via reflection at the splitter 304 without ever reaching the secondary laser 210, and thereby be present (likely in a small amount) in the further light emitted from the output port 308 of the PIC 300.

Fig. 3C shows a further reflection seeding arrangement. In this embodiment, the PIC 300 comprises an input port 306 and an output port 308. The secondary laser 210 comprises a port 314 which acts as both input and output (otherwise referred to herein as an input/output port). Waveguides leading from the input port 306 and output port 308 of the PIC 300 are joined at a circulator 316 implemented on the PIC 300.

The circulator 316 is generally envisioned to have 3 ports as shown in Fig. 3C. In this case, the operation of the circulator 316 may be that light entering the first port is conveyed to the second port, light entering the second port is conveyed to the third port, and light entering the third port is conveyed to the first port. The numbering of ports is arbitrary, and this mode of operation holds true however the ports are numbered.

In the embodiment of Fig. 3C, it may be considered that the first port of the circulator 316 is connected to the input port 306 of the PIC 300, the second port of the circulator 316 is connected to the port 314 of the secondary laser 210, and the third port of the circulator 316 is connected to the output port 308 of the PIC 300. This allows for light from the input port 306 of the PIC 300 to be conveyed to the port 314 of the secondary laser 210 in order to inject the secondary laser 210, and for further light emitted from the port 314 of the secondary laser 210 to be conveyed to the output port 308 of the PIC 300. On the other hand, due to the nature of the circulator 316, direct passage of light from the input port 306 of the PIC 300 to the output port 308 of the PIC 300 is expected to be minimal.

In operation, light from the primary laser 204 may arrive at the input port 306 of the PIC 300, via free space, an optical fibre, or any other means, and be conveyed across the substrate 302 to the port 314 of the secondary laser 210 via the circulator 316. This light may inject the secondary laser 210 via OIL. The secondary laser 210 may then emit further light from its port 314. This further light may travel to the output port 308 of the PIC 300 via the circulator 316, and from there to the interference unit 206 for measurement.

Fig. 3D shows a further reflection seeding arrangement. In this embodiment, the PIC 300 comprises a port 318 that functions as both input and output (otherwise referred to herein as an input/output port), and the secondary laser 210 also comprises an input/output port 314. Additionally, it is envisioned that the secondary node 208 that houses the PIC 300 will further comprise a device capable of splitting and/or combining laser beams (referred to collectively as a beam combining component) coupled to the port 318 of the PIC 300. For example, the beam combining component may comprise one or more of a splitter, a circulator, a polariser, or a polarising beamsplitter.

In operation, light from the primary laser 204 may arrive at the port 318 of the PIC 300 via the beam combining component, via free space, an optical fibre, or any other means, and be conveyed across the substrate 302 to the port 314 of the secondary laser 210. This light may inject the secondary laser 210 via OIL. The secondary laser 210 may then emit further light from its port 314. This further light may travel to the port 318 of the PIC 300, and from there to the interference unit 206 for measurement via the beam combining component.

It will be appreciated that not all of the secondary nodes 208 in the network 200 need have the same design. In particular, the embodiments of Figs. 3A, 3B, 3C, and 3D may be freely combined within a single network 200.

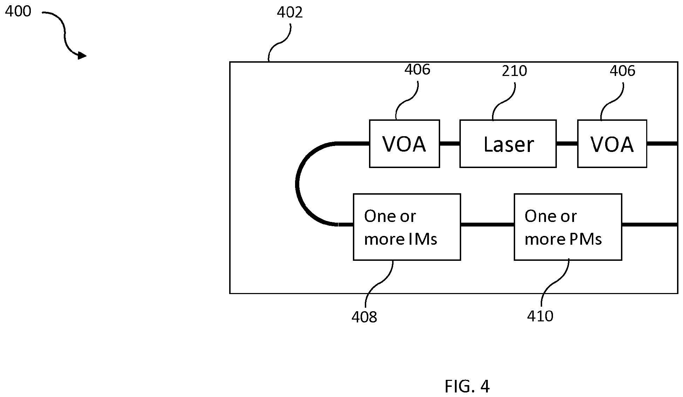

Fig. 4 shows a further PIC 400 that may be used as a secondary PIC. The PIC 400 of Fig. 4 comprises a substrate 402, a secondary laser 210, two variable optical attenuators (VOAs) 406, intensity modulation apparatus 408, and phase modulation apparatus 410, all connected in sequence.

The PIC 400 is intended as an illustration of a range of further components that may be included on the secondary PIC to provide useful functions. In particular, it is noted that the intensity modulation apparatus 408 and phase modulation apparatus 410 may function as the encoder 212 described above with reference to Fig. 2, such that in the embodiment of Fig. 4 the encoder 212 is included on the secondary PIC 400 and need not be provided separately.

The precise arrangement of components shown in Fig. 4 is merely illustrative and not intended as limiting. Generally speaking, it is envisioned that the secondary PIC 400 may comprise one or more of any of the following in addition to the secondary laser 210, in any order: an intensity modulator, a phase modulator, a VOA, a wavelength-division multiplexer (WDM), a wavelength-division de-multiplexer (de-WDM), an optical filter, a polariser, a polarisation controller, and/or a polarising beam splitter. In particular applications, any or all of these components may be usefully included on the secondary PIC 400 in various combinations and orderings. Additionally or alternatively, one or more of any or all of these components may be included in any order at the secondary node 208 separately from the secondary PIC 400 and coupled to a port thereof.

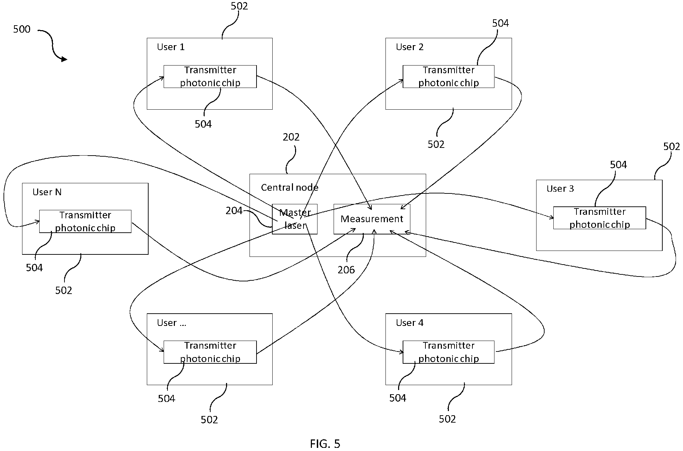

Fig. 5 shows a QKD network 500 similar to the QKD network 200 of Fig. 2, but wherein the encoder 212 of each secondary node 502 is included on the respective secondary PIC 504 (also referred to in this case as a transmitter photonic chip) rather than being implemented separately. For example, the secondary PICs 504 of Fig. 5 may be similar to the secondary PIC 400 shown in Fig. 4, which as noted above includes intensity and phase modulation apparatus 408, 410 suitable for acting as the encoder 212. Alternatively, the secondary PICs 504 of Fig. 5 may comprise any other arrangement of components that includes a secondary laser 210 and encoder 212.

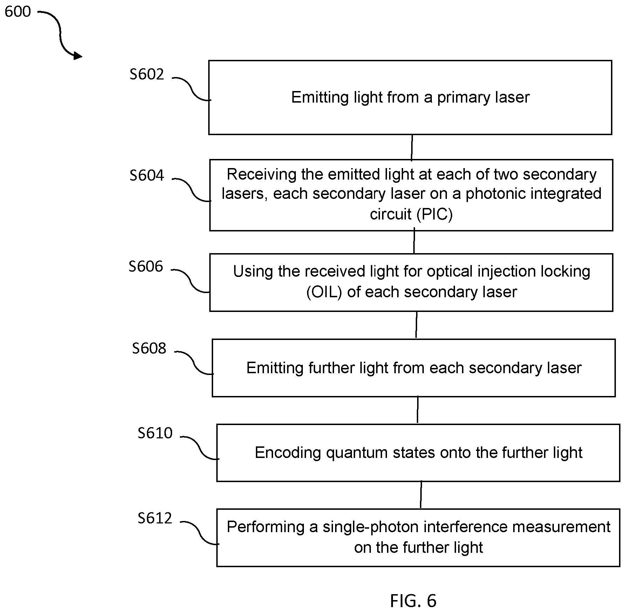

Fig. 6 is a flow chart showing a method 600 of QKD according to an embodiment. This method may, for example, be implemented within the QKD networks 200 and 500 described above with reference to Figs. 2 and 5.

At step S602, the method may comprise emitting light from a primary laser. For example, this may be the primary laser 204 shown in Figs. 2 and 5.

At step S604, the method may comprise receiving the emitted light at each of two secondary lasers, each secondary laser on a PIC. For example, these may be the secondary lasers 210 shown in Figs. 2 and 5.

It will be appreciated that there may be more than two secondary lasers - indeed, it is generally envisioned that the method 600 may be implemented for any number of secondary lasers that is at least 2 in order to allow for TF-QKD.

At step S606, the method may comprise using the received light for OIL of each secondary laser.

At step S608, the method may comprise emitting further light from each secondary laser. Due to the OIL of step S606, the further light may generally be coherent with the light received from the primary laser, and with the same wavelength.

At step S610, the method may comprise encoding quantum states onto the further light. For example, this may be accomplished using an encoder 212 of the kind described above with reference to Fig. 2. There may be one encoder for each secondary laser, which may or may not be implemented on the same secondary PIC as the respective secondary laser.

In particular, encoding quantum states onto the further light may comprise modulating the phase and/or the intensity of portions of the further light. If, for example, the secondary laser is operating in pulsed mode, or is continuous wave (CW) but the emitted light is being divided into pulses by a pulse carver, it may be that each successive pulse is separately modulated in intensity and/or phase.

Intensity modulation may, for example, be accomplished by one or more intensity modulators included in an encoder 212 of Fig. 2. Correspondingly, phase modulation may, for example, be accomplished by one or more phase modulators included in an encoder 212 of Fig. 2

At step S612, the method may comprise performing a single-photon interference measurement on the further light. For example, this may be done at an interference unit 206 as described above with reference to Figs. 2 and 5.

In particular, the single-photon interference measurement may be performed using methods broadly consistent with those described above with reference to Fig. 1. That is to say, performing the single-photon interference measurement may comprise receiving light from each of two secondary lasers; combining the received light from each secondary laser at a beamsplitter; and registering a detection event at a photodetector coupled to an output port of the beamsplitter

In embodiments where there are more than two secondary lasers, it is generally envisioned that single-photon interference events will be registered as the result of combinations of fields emitted by various pairs of secondary lasers, thereby spreading entanglement across the QKD network. This may generally be viewed as an implementation of TF-QKD as discussed above.

Whilst certain embodiments have been described, these embodiments have been presented by way of example only, and are not intended to limit the scope of the inventions. Indeed, the novel devices and methods described herein may be embodied in a variety of other forms; furthermore, various omissions, substitutions and changes in the form of the devices, methods and products described herein may be made without departing from the spirit of the inventions. The accompanying claims and their equivalents are intended to cover such forms or modifications as would fall within the scope and spirit of the inventions.

## Claims

**1.** A quantum key distribution (QKD) system comprising:
a primary node comprising a primary laser and an interference unit; and
two secondary nodes, each secondary node comprising a photonic integrated circuit (PIC), each PIC comprising a secondary laser configured to be injected by light from the primary laser, each secondary node further comprising an encoder configured to encode quantum states onto light emitted by the secondary laser;
wherein the interference unit is configured to perform single-photon interference measurements on light received from the secondary lasers.

**2.** The system of claim 1, wherein each PIC further comprises an input port and an output port, the respective secondary laser comprising an input port connected to the input port of the PIC and an output port connected to the output port of the PIC.

**3.** The system of claim 1, wherein each PIC further comprises an input port, an output port, and a splitter, the splitter being coupled to the input port, the output port, and a port of the respective secondary laser.

**4.** The system of claim 1, wherein each PIC further comprises an input port, and output port, and a circulator comprising three ports, further wherein:
a first port of the circulator is coupled to the input port;
a second port of the circulator is coupled to a port of the respective secondary laser; and
a third port of the circulator is coupled to the output port.

**5.** The system of claim 1, wherein each PIC further comprises a port coupled to a port of the respective secondary laser, and wherein each secondary node further comprises a beam combining component coupled to the port of the secondary PIC.

**7.** The system of any preceding claim, wherein one of the encoders comprises an intensity modulator.

**8.** The system of any preceding claim, wherein one of the encoders comprises a phase modulator.

**9.** The system of any preceding claim, wherein each encoder is included on the PIC of the respective secondary node.

**10.** The system of any preceding claim, wherein one of the PICs further comprises a variable optical attenuator, a wavelength-division multiplexer or de-multiplexer, an optical filter, or a polariser.

**11.** The system of any preceding claim, wherein the interference unit comprises a beamsplitter configured to receive light from each of two secondary lasers, and two photodetectors coupled to output ports of the beamsplitter, such that a detection event at one of the beamsplitters indicates a single-photon interference measurement.

**12.** A method of quantum key distribution (QKD), the method comprising:
emitting light from a primary laser;
receiving the emitted light at each of two secondary lasers, each secondary laser on a photonic integrated circuit (PIC);
using the received light for optical injection locking (OIL) of each secondary laser;
emitting further light from each secondary laser;
encoding quantum states onto the further light; and
performing a single-photon interference measurement on the further light.

**13.** The method of claim 12, wherein encoding quantum states onto the further light comprises modulating an intensity of a portion of the further light.

**14.** The method of claim 12 or 13, wherein encoding quantum states onto the further light comprises modulating a phase of a portion of the further light.

**15.** The method of any of claims 12 to 14, wherein performing a single-photon interference measurement on the further light comprises:
receiving light from each of two secondary lasers;
combining the received light from each secondary laser at a beamsplitter; and
registering a detection event at a photodetector coupled to an output port of the beamsplitter.
